# EUROPEAN PATENT APPLICATION

(11) **EP 3 613 503 A1**
(43) Date of publication of application: **26.02.2020**
(21) Application number: 18190326.1
(22) Date of filing: 22.08.2018
(51) Int. Cl.: B01J 29/74, B01J 23/44, C01B 39/48, B01J 35/04, B01J 35/10, B01D 53/94, F01N 3/08, F01N 3/20, B01J 37/02, B01J 37/08, B01J 37/00, B01J 29/76

(54) **PASSIVE NITROGEN OXIDE ADSORBER**

(71) Applicant: UMICORE AG & CO. KG, 63457 Hanau-Wolfgang (DE)
(72) Inventor: SCHUETZE, Frank-Walter, 63739 Aschaffenburg (DE); HENGST, Christoph, 35510 Butzbach (DE); MARTENS, Johan Adriaan, 3040 Huldenberg (BE); KERKHOFS, Stef Jules Peter, 60314 Frankfurt (DE); VERHEYEN, Elke Jane June, 2350 Vosselaar (BE); DE PRINS, Michiel, 2350 Vosselaar (BE)

(57) **Abstract**

The present invention relates to a passive nitrogen oxide adsorber for the passive storage of nitrogen oxides from the exhaust gas of a combustion engine, which comprises 12-member ring zeolites such as ZSM-10. In a preferred embodiment, the zeolite additionally comprises 8-member rings. The zeolites can be used for supporting catalysis related transport and reaction processes, plated with palladium.

## Description

The present invention relates to a passive nitrogen oxide adsorber for the passive storage of nitrogen oxides from the exhaust gas of a combustion engine, which comprises a 12-ring zeolite plated with palladium.

The exhaust gas of motor vehicles that are operated with lean-burn combustion engines, such as diesel engines, also contain, in addition to carbon monoxide (CO) and nitrogen oxides (NOₓ), components that result from the incomplete combustion of the fuel in the combustion chamber of the cylinder. In addition to residual hydrocarbons (HC), which are usually also predominantly present in gaseous form, these include particle emissions, also referred to as "diesel soot" or "soot particles." These are complex agglomerates from predominantly carbonaceous particulate matter and an adhering liquid phase, which usually preponderantly consists of longer-chained hydrocarbon condensates. The liquid phase adhering to the solid components is also referred to as "Soluble Organic Fraction SOF" or "Volatile Organic Fraction VOF."

To clean these exhaust gases, the aforementioned components must be converted to harmless compounds as completely as possible. This is only possible with the use of suitable catalysts.

Soot particles may be very effectively removed from the exhaust gas with the aid of particle filters. Wall-flow filters made from ceramic materials have especially proven themselves. These wall-flow filters are made up of a plurality of parallel channels that are formed by porous walls. The channels are alternately sealed at one of the two ends of the filter so that first channels are formed that are open at the first side of the filter and sealed at the second side of the filter, and second channels are formed that are sealed at the first side of the filter and open at the second side of the filter. The exhaust gas flowing into the first channels, for example, may leave the filter again only via the second channels and must flow through the porous walls between the first and second channels for this purpose. The particles are retained when the exhaust gas passes through the wall.
It is known that particle filters may be provided with catalytically-active coatings. EP1820561 A1 describes, for example, the coating of a diesel particle filter having a catalyst layer which facilitates the burning off of filtered soot particles.

A known method for removing nitrogen oxides from exhaust gases in the presence of oxygen is selective catalytic reduction (SCR method) by means of ammonia on a suitable catalyst. In this method, the nitrogen oxides to be removed from the exhaust gas are converted to nitrogen and water using ammonia.
Iron-exchanged and, in particular, copper-exchanged zeolites, for example, may be used as SCR catalysts; see, for example, WO2008/106519 A1, WO2008/118434 A1, and WO2008/132452 A2. SCR catalysts for converting nitrogen oxides with ammonia contain no precious metals - in particular, no platinum or palladium. In the presence of these metals, the oxidation of ammonia with oxygen to form nitrogen oxides would actually take place preferentially, and the SCR reaction (reaction of ammonia with nitrogen oxide) would fall behind. Insofar as the literature occasionally refers to platinum-exchanged or palladium-exchanged zeolites as "SCR catalysts," this does not relate to the NH₃-SCR reaction, but rather to the reduction of nitrogen oxides by means of hydrocarbons. However, the latter reaction is only slightly selective, so that it is more accurately referred to as "HC-DeNOx reaction" instead of "SCR reaction."
The ammonia used as reducing agent may be made available by feeding an ammonia precursor compound, e.g., urea, ammonium carbamate, or ammonium formate, into the exhaust gas stream, and by subsequent hydrolysis.
The disadvantage of SCR catalysts is that they only work from an exhaust gas temperature of approx. 180 to 200 °C and do not, therefore, convert nitrogen oxides that are formed in the engine's cold-start phase.

In order to remove the nitrogen oxides, so-called nitrogen oxide storage catalysts are also known, for which the term, "Lean NOx Trap," or LNT, is common. Their cleaning action is based upon the fact that in a lean operating phase of the engine, the nitrogen oxides are predominantly stored in the form of nitrates by the storage material of the storage catalyst, and the nitrates are broken down again in a subsequent rich operating phase of the engine, and the nitrogen oxides which are thereby released are converted with the reducing exhaust gas components in the storage catalyst to nitrogen, carbon dioxide, and water. This operating principle is described in, for example, SAE document SAE 950809.
As storage materials, oxides, carbonates, or hydroxides of magnesium, calcium, strontium, barium, alkali metals, rare earth metals, or mixtures thereof come, in particular, into consideration. As a result of their alkaline properties, these compounds are able to form nitrates with the acidic nitrogen oxides of the exhaust gas and to store them in this way. They are deposited in the most highly dispersed form possible on suitable substrate materials in order to produce a large interaction surface with the exhaust gas. In addition, nitrogen oxide storage catalysts generally contain precious metals such as platinum, palladium, and/or rhodium as catalytically-active components. It is their purpose to, on the one hand, oxidize NO to NO₂, as well as CO and HC to CO₂, under lean conditions and to, on the other hand, reduce released NO₂ to nitrogen during the rich operating phases, in which the nitrogen oxide storage catalyst is regenerated.
Modern nitrogen oxide storage catalysts are described in, for example, EP0885650 A2, US2009/320457, WO2012/029050 A1, and WO2016/020351 A1.

It is already known to combine soot particle filters and nitrogen oxide storage catalysts. EP1420 149 A2 and US2008/141661, for example, thus describe systems comprising a diesel particle filter and a nitrogen oxide storage catalyst arranged downstream.

Moreover, EP1393069 A2, EP1433519 A1, EP2505803 A2, and US2014/322112, for example, already propose that particle filters be coated with nitrogen oxide storage catalysts. US2014/322112 describes a zoning of the coating of the particle filter with a nitrogen oxide storage catalyst, such that one zone starting from the upstream end of the particle filter is located in the input channels, and another zone starting from the downstream end of the particle filter is located in the output channels.
The procedure described in SAE Technical Paper 950809, in which the nitrogen oxides are stored by a nitrogen oxide storage catalyst in a lean-burn operating phase of the engine and are released again in a subsequent rich operating phase, is also referred to as active nitrogen oxide storage.
In addition, a method known as passive nitrogen oxide storage has also been described. Nitrogen oxides are stored thereby in a first temperature range and released again in a second temperature range, wherein the second temperature range lies at higher temperatures than the first temperature range. Passive nitrogen oxide storage catalysts are used to implement this method, which catalysts are also referred to as PNA (for "passive NOx adsorbers").
By means of passive nitrogen oxide storage catalysts, nitrogen oxides may - particularly at temperatures below 200 °C, at which an SCR catalyst has not yet reached its operating temperature - be stored and released again as soon as the SCR catalyst is ready for operation. Thus, an increased total nitrogen oxide conversion is realized in the exhaust gas after-treatment system by the interim storage below 200 °C of the nitrogen oxides emitted by the engine, as well as the concerted release of those nitrogen oxides above 200 °C.

Palladium supported on cerium oxide has been described as a passive nitrogen oxide storage catalyst (see, for example, WO2008/047170 A1 and WO2014/184568 A1), which palladium, according to WO2012/071421 A2 and WO2012/156883 A1, may also be coated on a particle filter. From WO2012/166868 A1, it is known to use a zeolite as a passive nitrogen oxide storage catalyst, which zeolite contains, for example, palladium and a further metal, such as iron, for example. WO2015/085303 A1 discloses passive nitrogen oxide storage catalysts which contain a precious metal and a small-pore molecular sieve with a maximum ring size of eight tetrahedral atoms.

Modern and future diesel engines are becoming more and more efficient, as a result of which exhaust gas temperatures are falling. In parallel, the legislation on the conversion of nitrogen oxides is becoming increasingly stringent. The result is that SCR catalysts alone no longer suffice to meet the nitrogen oxide limits. In particular, there continues to be further need for technical solutions that ensure that nitrogen oxides formed during the engine's cold-start phase do not escape into the environment.

It has now been found that zeolites plated with palladium, whose largest channels are formed by 12 tetrahedrally-coordinated atoms, have excellent passive nitrogen oxide adsorber properties.

The present invention relates, therefore, to a catalyst comprising a carrier substrate of length L, palladium, and a zeolite, whose largest channels are formed by 10 tetrahedrally-coordinated atoms.

Zeolites are two- or three-dimensional structures, the smallest structures of which can be considered to be SiO₄ and AlO₄ tetrahedra. These tetrahedra come together to form larger structures, wherein two are connected each time via a common oxygen atom. Different-sized rings may be formed thereby - for example, rings of four, six, or even nine tetrahedrally-coordinated silicon or aluminum atoms. The different types of zeolite are often defined via the largest ring size, because this size determines which guest molecules can penetrate the zeolite structure, and which not. It is customary to differentiate between large-pore zeolites with a maximum ring size of 12, medium-pore zeolites with a maximum ring size of 10, and small-pore zeolites with a maximum ring size of 8.
Furthermore, zeolites are grouped by the Structural Commission of the International Zeolite Association into structural types which are each provided with a three-letter code; see, for example, Atlas of Zeolite Framework Types, Elsevier, 5th edition, 2001.

The catalyst according to the invention particularly preferably comprises zeolites whose largest channels are formed by 12 tetrahedrally-coordinated atoms and which belong to the structural type, BEA, MOR, MOZ, or ZSM-10. MOZ and ZSM-10 are most preferred.

An MOZ type material contains both small (8-membered rings) and large pores (12-membered rings). Given the definition for zeolites according to their biggest pore aperture as described above, MOZ and its isotype ZSM-10 are large pore size zeolites.
It is well known to the skilled person that the synthesis of a specific zeolite generally requires the use of a specific structure-directing agent (SDA) or a derivative thereof. In the case of MOZ and its isotype ZSM-10, *N,N*'-1,4-dimethyl-1,4-diazoniabicyclo[2.2.2]octane dication, often referred to as "diquat", is a suitable SDA. Diquat is the N,N-dimethyl derivative of 1,4-diazoniabicyclo[2.2.2]octane, which is also known as DABCO. This di-quaternary ammonium cation can be synthesized by reacting DABCO with iodomethane. The diquat diiodide obtained can be transferred into the corresponding diquat dihydroxide by ion exchange.

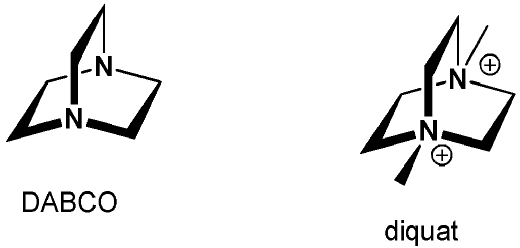

A reproducible, scaleable synthesis of ZSM-10 is disclosed in JB Higgins and Kirk D. Schmitt: "ZSM-10: Synthesis and tetrahedral framework structure", Zeolites 1996, 16, 236-244. A first solution is prepared by mixing aqueous KOH with aluminium powder and stirring for 3.5 h, followed by the addition of an aqueous solution of diquat diiodide. A second aqueous solution comprises KOH and Cabosil. Both solutions are mixed and aged for 4 days at 140°C. After centrifugation, washing and calcining of the product, an NH₄⁺ exchange is carried out, following by centrifuging, washing and calcining for 3 h at 500°C, the now ammonium-exchanged product again. Higgins and Schmitt describe the tetrahedral framework of the ZSM-10 zeolite as consisting from columns of alternating cancrinite cages and double six-membered rings. It has two different one-dimensional 12-ring pore systems parallel to the c-axis: one channel being topologically identical to the sinusoidal channel on the LTL framework, and the other one being identical to the OFF framework. However, the exact framework type of ZSM-10 was not yet known in 1996.

A method for making ZSM-10 by use of diquat salts was already described in US 3,692,470. Aluminum was dissolved in aqueous KOH solution, and Cab-O-Silwas dissolved in aqueous KOH solution in another vessel. Both solutions were mixed, and diquat was added. The product, i.e. ZSM-10, was filtered off, washed and dried, but not calcined. US 3,692,470 also discloses methods to recover diquat by ion exchange. However, transition metal containing ZSM-10, e.g. the copper containing form, are not described.
JP H02-258617 A also discloses a method for making ZSM-10. An aqueous solution of sodium silicate is reacted with an aqueous solution containing aluminium. Then the amorphous sodium aluminosilicate compound is crystallized in the presence of potassium hydroxide and 1,3-dimethyl-1,4-diazoniabicyclo(2.2.2)octane bromide to yield crystalline ZSM-10.

The similarity of ZSM-10 to LTL was confirmed by Dorset (D Dorset: "The crystal structure of ZSM-10, a powder X-ray and electron diffraction study", Z Kristallogr 2006, 211, 260-265) and by Foster et al. (MD Foster, MMJ Treacy, JB Higgins, I Rivin, E Balkovsky, KH Randall: "A systematic topological search for the framework of ZSM-10", J Appl Cryst 2005, 38, 1028-1030), but these two publications also failed to completely elucidate the structure of this zeolite.

In 2007, the International Zeolite Association added the MOZ framework type to the list of zeolite framework types. McCusker et al. reported in 2009 that both LZ-135 and ZSM-10 are related to one another and show similarities to the zeolite framework type LTL, but both belong to two framework types unknown before: LZ-135 belongs to the framework type LTF, whereas ZSM-10 exhibits the framework structure MOZ, see LB McCusker, C Baerlocher, ST Wilson, RW Broach: "Synthesis and Structural Characterization of the Aluminosilicate LZ-135, a Zeolite Related to ZSM-10", J Phys Chem C 2009, 113, 9838-9844.

US 5,714,133 discloses a method for the synthesis of crystalline aluminosilicate zeolites, such as ZSM-10, whose synthesis requires or is improved by one or more periods of gel aging. In the method according to US 5,714,133, the gel aging step is replaced by a continuous increase in temperature to the final crystallization temperature. A first solution of aluminium powder, KOH and diquat and a second solution of Cab-o-sil and KOH are both stirred separately and then mixed. Subsequently, the mixture is heated to 140°C over two days and then held a further two days at 140°C. After centrifugation, washing and calcining, the resulting zeolite is either ammonium exchanged followed by a barium exchange and impregnation with tetramine platinum(II) chloride or directly treated with tetramine platinum(II) chloride. US 5,714,133 is silent about potential NOₓ reduction capacities of the resulting ZSM-10 zeolites, and it does not disclose copper or iron exchanged ZSM-10, either.

US 2008/0127634 A1 discloses a method for reducing nitrogen oxides including NO and NO₂ in an exhaust stream also comprising oxygen, carbon monoxide and hydrocarbons at a temperature above about 150°C, wherein the method comprises oxidizing NO in the exhaust stream to NO₂, adding diesel fuel hydrocarbons and their oxygenates to the exhaust stream for the reduction of nitrogen oxides, and contacting the exhaust stream with a hybrid reduction catalyst comprising an alkali metal or an alkaline earth metal, a zeolite, a transition metal, and a metal oxide to the reduce the nitrogen oxides to N₂. The hybrid NOₓ reduction catalyst is prepared by mixing an alkali metal or alkaline earth metal supported on a zeolite and a transition metal supported on a metal oxide through an aqueous ion exchange and wet impregnation to form a homogeneous physical mixture which is then compressed to form a wafer and subsequently annealed. The zeolite may be a medium or large pore zeolite, and ZSM-10 is described as one of the suitable large pore zeolites. All alkali and alkaline earth metals can be supported on said zeolite. The transition metal is selected from silver, copper, cobalt, nickel, iron, manganese, chromium, molybdenum and vanadium, and the metal oxide is selected from Al₂O₃, SiO₂, TiO₂, SnO₂ and MgO. However, US 2008/0127634 A1 is silent about the amount of zeolite, alkali or alkaline earth metal, transition metal, and metal oxide. Furthermore, it deals with a physical mixture of alkali or alkaline earth metal zeolites on the one hand and transition metals supported on a metal oxide on the other hand. There is no hint to a zeolite comprising both an alkali or alkaline earth metal and a transition metal or to a method for making such a zeolite.

Crystalline aluminosilicate zeolites comprising a MOZ framework type material are disclosed in PCT/EP 2018/053307. The MOZ framework type material contains 0.1 to 12.5 wt.-% copper, calculated as CuO and based on the total weight of the respective zeolite.

The catalyst according to the invention particularly preferably comprises zeolites whose largest channels are formed by 12 tetrahedrally-coordinated atoms. In one embodiment, these zeolites whose largest channels are formed by 12 tetrahedrally coordinated atoms belong to the MOZ structural type. In a preferred embodiment, the catalyst according to the present invention comprises zeolites whose largest channels are formed by 12 tetrahedrally coordinated atoms and which, in addition, comprise 8 rings, and which belong to the MOZ structural type. Preferred examples of such zeolites which comprise both 12 rings and 8 rings and which belong to the MOZ structural type are MOZ and ZSM-10.

In one embodiment of the present invention, the zeolite which belongs to the MOZ structural type is a MOZ framework type material as disclosed in PCT/EP 2018/053307.
Preferably, the silica to alumina molar ratio of the MOZ framework type material according to PCT/EP2018/053307 ranges from 5 to 30, preferably 6 to 16 and even more preferably, the silica to alumina ratio ranges from 7 to 9. Hereinafter, the silica to alumina molar ratio is abbreviated as SAR.

The MOZ framework type material according to PCT/EP2018/053307, which can be used in the present invention, is further specified hereinafter:
It comprises copper in an amount of 0.1 to 12.5 wt.-%, preferably 0.1 to 10 wt.-%, even more preferably 1.5 to 6 wt.-%, and most preferably 3 to 5 wt.-%, calculated as CuO and based on the total weight of the respective zeolite.

In one embodiment of PCT/EP2018/053307, the copper to aluminium atomic ratio of the zeolites of the MOZ framework type material is in the range of between 0.003 to 0.5.

In one embodiment of PCT/EP2018/053307, the zeolites comprise cations of at least one alkali or alkaline earth metal selected from lithium, sodium, potassium, rubidium, cesium, ammonium, magnesium, calcium, strontium and barium in an amount of 0.3 to 5 wt.-%, calculated as pure metals and based on the total weight of the zeolites. It is well known to the skilled person that the ammonium cation NH₄⁺ has very similar properties to heavier alkali metal cations. Therefore, the ammonium cation NH₄⁺ is considered an alkali cation in the present invention, which is in accordance with common practice. In a preferred embodiment, the zeolites comprise potassium cations or a mixture of sodium and potassium cations. More preferably, the zeolites comprise potassium cations.

The cations of at least one alkali or alkaline earth metal are present in an amount of 0.3 to 9 wt.-%, preferably 0.3 to 5.0 wt.-%, and even more preferably 0.5 to 3.0 wt.-%, calculated as pure metals and based on the total weight of the zeolites. In case of ammonium cations, their content is calculated from results of combustion analysis which is well known to the skilled person.

In one embodiment of PCT/EP2018/053307, the crystallite size of the zeolites according to the invention is between 10 nm to 5000 nm, preferably 20 nm to 2000 nm, even more preferably between 50 nm and 1000 nm, and most preferably between 50 nm and 500 nm.

The MOZ framework type material according to PCT/EP2018/053307 with all its embodiments and combinations of embodiments as disclosed in the present application can be used in the present invention without departing from the scope of the claims.

The MOZ framework type zeolites according to PCT/EP2018/053307 can be synthesized by a process comprising the following steps:
a) preparing a first aqueous reaction mixture comprising
   - a silica source and potassium hydroxide,
b) preparing a second aqueous reaction mixture comprising
   - potassium hydroxide,
   - an aluminium source,
   - a structure-directing agent selected from N,N'-1,4-dimethyl-1,4-diazoniabicyclo-[2.2.2]octane difluoride, N,N'-1,4-dimethyl-1,4-diazoniabicyclo-[2.2.2]octane dichloride, N,N'-1,4-dimethyl-1,4-diazoniabicyclo-[2.2.2]octane dibromide, N,N'-1,4-dimethyl-1,4-diazoniabicyclo-[2.2.2]octane diiodide, N,N'-1,4-dimethyl-1,4-diazoniabicyclo-[2.2.2]octane dihydroxide and mixtures thereof,
c) combining the two aqueous reaction mixtures,
d) aging the reaction mixture obtained in step c),
e) heating the mixture,
f) recovering, washing and drying the zeolite obtained in step e),
g) calcining the zeolite,
h) introducing of Cu,
i) washing and drying the copper containing zeolite obtained in step h).

According to step h) of this method, copper is introduced via ion exchange. Such techniques are well known to the skilled person and include, for instance, liquid ion exchange, incipient wetness impregnation, and solid state ion exchange as described in PCT/EP2018/053307.

It is obvious for the skilled person that step h) of PCT/EP2018/053307, i.e. the introduction of copper, can be left out in order to obtain a MOZ framework type material that does not comprise copper. Furthermore, it is well known that ion exchange techniques can be used to remove, decrease, introduce or increase the amount of cations in a zeolite. In doing so, the amounts of the respective cations in the zeolite can be adjusted according to the requirements of their intended use. The cations can be, for example, protons, ammonium cations, transition metal cations like copper and iron cations, or alkali and alkaline earth metal cations like cations of lithium, sodium, potassium, cesium, rubidium, magnesium, calcium, strontium, and barium.

The MOZ framework type material and the method for making it, as disclosed in PCT/EP2018/053307, can be used to provide a passive nitrogen oxide adsorber for the passive storage of nitrogen oxides from the exhaust gas of a combustion engine according to the present invention, which comprises a 12-ring zeolite plated with palladium.

The catalyst according to the invention comprises palladium. The palladium is preferably present thereby as palladium cation in the zeolite structure, i.e., in ion-exchanged form. However, the palladium may also be wholly or partially present as palladium metal and/or as palladium oxide in the zeolite structure and/or on the surface of the zeolite structure.
The palladium may be present in quantities of 0.01 to 20 wt% in relation to the sum of the weights of zeolite and palladium and calculated as palladium metal.
Palladium is preferably present in quantities of 0.5 to 10 wt% - particularly preferably, of 0.5 to 4 wt%, and, very particularly preferably, of 0.5 to 3 wt% - in relation to the sum of the weights of zeolite and palladium and calculated as palladium metal.

The catalyst according to the invention comprises a supporting body. This may be a flow-through substrate or a wall-flow filter.
A wall-flow filter is a supporting body that comprises channels of length L which extend in parallel between a first and a second end of the wall-flow filter, which are alternatingly sealed either at the first or second end, and which are separated by porous walls. A flow-through substrate differs from a wall-flow filter, in particular, in that the channels of length L are open at its two ends.
In an uncoated state, wall-flow filters have, for example, porosities of 30 to 80% - in particular, 50 to 75%. In the uncoated state, their average pore size is 5 to 30 micrometers, for example. Generally, the pores of the wall-flow filter are so-called open pores, i.e., they have a connection to the channels. Furthermore, the pores are normally interconnected with one another. This enables easy coating of the inner pore surfaces, on the one hand, and an easy passage of the exhaust gas through the porous walls of the wall-flow filter, on the other.

Flow-through substrates are known to the person skilled in the art, as are wall-flow filters, and are commercially available. They consist, for example, of silicon carbide, aluminum titanate, or cordierite.

In one embodiment, the catalyst according to the invention does not comprise any further metal except palladium - in particular, neither copper, nor iron, nor platinum.

In a further embodiment of the catalyst according to the invention, the zeolite and the palladium are present in the form of a coating on the carrier substrate. The coating may thereby extend over the entire length L of the carrier substrate or only over a section thereof.

In the case of a wall-flow filter, the coating may be situated on the surfaces of the input channels, on the surfaces of the output channels, and/or in the porous wall between the input and output channels.

Catalysts according to the invention, in which the zeolite and the palladium are present in the form of a coating on the carrier substrate, may be produced according to the methods familiar to the person skilled in the art, such as according to the usual dip coating methods or pump and suck coating methods with subsequent thermal post-treatment (calcination). A person skilled in the art knows that, in the case of wall-flow filters, their average pore size and the average particle size of the materials to be coated can be adapted to each other such that they lie on the porous walls that form the channels of the wall-flow filter (on-wall coating). The average particle sizes of the materials to be coated may, however, be selected such that said materials are located in the porous walls that form the channels of the wall-flow filter so that the inner pore surfaces are thus coated (in-wall coating). In this instance, the average particle size of the materials to be coated must be small enough to penetrate the pores of the wall-flow filter.

In one embodiment of the present invention, the zeolite and the palladium are present coated over the entire length L of the carrier substrate, wherein no further catalytically-active coating is found on the carrier substrate.

In other embodiments of the present invention, the carrier substrate may, however, also carry one or more further catalytically-active coatings.

For example, the carrier substrate may, in addition to a coating comprising the zeolites and the palladium, comprise a further coating which is oxidation-catalytically active.
The oxidation-catalytically-active coating comprises, for example, platinum, palladium, or platinum and palladium on a carrier material. In the latter case, the mass ratio of platinum to palladium is, for example, 4:1 to 14:1.
All materials that are familiar to the person skilled in the art for this purpose are considered as carrier materials. They have a BET surface of 30 to 250 m²/g - preferably, of 100 to 200 m²/g (specified according to DIN 66132) - and are, in particular, aluminum oxide, silicon oxide, magnesium oxide, titanium oxide, and mixtures or mixed oxides of at least two of these materials. Aluminum oxide, magnesium/aluminum mixed oxides, and aluminum/silicon mixed oxides are preferred. If aluminum oxide is used, it is particularly preferable that it be stabilized, e.g., with 1 to 6 wt% - in particular, 4 wt% - lanthanum oxide.
The coating comprising the zeolites and the palladium (hereinafter referred to as coating A) and the oxidation-catalytically-active coating (hereinafter referred to as coating B) may be arranged on the carrier substrate in various ways.
If the carrier substrate is a flow-through substrate, both coatings may, for example, be present coated over the entire length L or only over a section of the carrier substrate.

For example, coating A, starting from an end of the supporting body, may extend over 10 to 80% of its length L, and coating B, starting from another end of the supporting body, over 10 to 80% of its length L_{A}.
In this case, it may be that L = L_{A} + L_{B} applies, wherein L_{A} is the length of the coating A, and L_{B} is the length of the coating B. However, L < L_{A} + L_{B} may also apply. In this case, coatings A and B overlap. Finally, L > L_{A} + L_{B} may also apply if a section of the supporting body remains free of coatings. In the latter case, a gap remains between coatings A and B, which gap is at least 0.5 cm long, i.e., for example, 0.5 to 1 cm.

However, coatings A and B may both also be coated over the entire length L. In this case, coating B, for example, may be present directly on the carrier substrate, and coating A on coating B. Alternatively, coating A may also be present directly on the carrier substrate, and coating B on coating A.

It is further possible that one coating extends over the entire length of the supporting body and the other over only a section thereof.

In a preferred embodiment, a zeolite of the MOZ type plated with 0.5 to 4 wt% palladium lies directly on the carrier substrate over its entire length L, and upon this coating is a coating containing platinum or platinum and palladium in a mass ratio of 4:1 to 14:1, also over the entire length L.

In particular, the lower layer (for example, Pd-MOZ) is present thereby in a quantity of 50 to 250 g/L carrier substrate, and the upper layer (Pt or Pt/Pd) in a quantity of 50 to 100 g/L carrier substrate.

If the carrier substrate is a wall-flow filter, coatings A and B may extend over the entire length L of the wall-flow filter or over only a section thereof in a manner analogous to that described above for flow-through substrates. In addition, the coatings may be on the walls of the input channels, on the walls of the output channels, or in the walls between the input and output channels.

In another embodiment of the present invention, the carrier substrate is formed from the zeolite whose largest channels are formed by 12 tetrahedrally-coordinated atoms, palladium, and a matrix component.
Carrier substrates, flow-through substrates, and wall-flow substrates that do not just consist of inert material, such as cordierite, but additionally contain a catalytically-active material are known to the person skilled in the art. To produce them, a mixture consisting of, for example, 10 to 95 wt% of an inert matrix component and 5 to 90 wt% of catalytically-active material is extruded according to a method known per se. All of the inert materials that are also otherwise used to produce catalyst substrates can be used as matrix components in this case. These are, for example, silicates, oxides, nitrides, or carbides, wherein magnesium aluminum silicates, in particular, are preferred.

In embodiments of the present invention, the extruded carrier substrate, which comprises the zeolite whose largest channels are formed by 12 tetrahedrally-coordinated atoms, as well as palladium, may be coated with one or more catalytically-active coatings, e.g., with the oxidation-catalytically-active coatings described above.
The catalyst according to the invention is especially suitable as a passive nitrogen oxide storage catalyst, i.e., it is able to store nitrogen oxides at temperatures below 200 °C and to withdraw them again at temperatures above 200 °C. It is, therefore, possible, in combination with a downstream SCR catalyst, to effectively convert nitrogen oxides across the entire temperature range of the exhaust gas, including the cold-start temperatures.

The present invention therefore relates to an exhaust gas system comprising
a) a catalyst comprising a carrier substrate of length L, palladium, and a zeolite, whose largest channels are formed by 12 tetrahedrally-coordinated atoms, and
b) an SCR catalyst.

In principle, the SCR catalyst in the exhaust gas system according to the invention may be selected from all the active catalysts in the SCR reaction of nitrogen oxides with ammonia - particularly such as are commonly known to the person skilled in the art in the field of automotive exhaust gas catalysis. This includes catalysts of the mixed-oxide type, as well as catalysts based upon zeolites - in particular, upon transition metal-exchanged zeolites.

In embodiments of the present invention, SCR catalysts are used that contain a small-pore zeolite with a maximum ring size of eight tetrahedral atoms and a transition metal. Such SCR catalysts are described in, for example, WO2008/106519 A1, WO2008/118434 A1, and WO2008/132452 A2.
In addition, however, large-pore and medium-pore zeolites may also be used, wherein those of the BEA structural type, in particular, come into question. Thus, iron-BEA and copper-BEA are of interest.

Particularly preferred zeolites belong to the BEA, AEI, AFX, CHA, KFI, ERI, LEV, MER, or DDR structure types and are particularly preferably exchanged with cobalt, iron, copper, or mixtures of two or three of these metals.

The term, zeolites, here also includes molecular sieves, which are sometimes also referred to as "zeolite-like" compounds. Molecular sieves are preferred, if they belong to one of the aforementioned structure types. Examples include silica aluminum phosphate zeolites, which are known by the term, SAPO, and aluminum phosphate zeolites, which are known by the term, AIPO. These too are particularly preferred, when they are exchanged with cobalt, iron, copper, or mixtures of two or three of these metals.

Preferred zeolites are also those that have an SAR (silica-to-alumina ratio) value of 2 to 100, more preferably 5 to 50, and most preferably, the SAR value is between 10 and 40.

The zeolites or molecular sieves contain transition metal - in particular, in quantities of 1 to 10 wt%, and especially 2 to 5 wt% - calculated as metal oxide, i.e., for example, as Fe₂O₃ or CuO.

Preferred embodiments of the present invention contain beta-type (BEA), chabazite-type (CHA), or Levyne-type (LEV) zeolites or molecular sieves exchanged with copper, iron, or copper and iron as SCR catalysts. Appropriate zeolites or molecular sieves are known, for example, by the names, ZSM-5, Beta, SSZ-13, SSZ-62, Nu-3, ZK-20, LZ-132, SAPO-34, SAPO-35, AIPO-34, and AIPO-35; see, for example, US 6,709,644 and US 8,617,474.
In an embodiment of the exhaust gas system according to the invention an injection device for reducing agent is located between the catalyst, which a carrier substrate of length L, palladium, and a zeolite whose largest channels are formed by 8 tetrahedrally-coordinated atoms, and the SCR catalyst.
The person skilled in the art may choose the injection device arbitrarily, wherein suitable devices may be found in the literature (see, for example, T. Mayer, Feststoff-SCR-System auf Basis von Ammoniumcarbamat (Solid SCR System Based upon Ammonium Carbamate), Dissertation, TU Kaiserslautern, 2005). The ammonia as such or in the form of a compound may be introduced via the injection device into the exhaust gas flow from which ammonia is formed under the ambient conditions prevailing. As such, aqueous solutions of urea or ammonium formiate, for example, come into consideration, such as solid ammonium carbamate. As a rule, the reducing agent or precursor thereof is held available in an accompanying container which is connected to the injection device.

The SCR catalyst is preferably present in the form of a coating on a supporting body, which may be a flow-through substrate or a wall-flow filter and may, for example, consist of silicon carbide, aluminum titanate, or cordierite.
Alternatively, however, the supporting body itself may also consist of the SCR catalyst and a matrix component as described above, i.e., be present in extruded form.

The present invention also relates to a method for the cleaning of exhaust gases from motor vehicles that are operated by lean-burn engines, e.g., diesel engines, which method is characterized in that the exhaust gas is channeled through an exhaust gas system according to the invention.

### Example 1

a) A zeolite of the MOZ structural type is impregnated with 3 wt% palladium (from commercially available palladium nitrate) ("incipient wetness"). The powder thus obtained is subsequently dried at 120 °C and calcined at 500 °C.
b) The calcined powder containing Pd is suspended in demineralized water, mixed with 8% of a commercially available binder with a boehmite base, and ground by means of a ball mill. Subsequently, according to a conventional method, a commercially available honeycomb ceramic substrate (flow-through substrate) is coated along its entire length with the washcoat thus obtained. The washcoat load is 50 g/L in relation to the zeolites containing Pd (corresponds to 54 g/L incl. binder), which corresponds to a precious metal load of 42.5 g/ft³ Pd. The catalyst thus obtained is calcined at 550 °C.

### Example 2

Example 1 is repeated with the difference that the ceramic substrate is coated with a washcoat comprising palladium containing zeolites in an amount of 100 g/L (corresponds to 108 g/L incl. binder). This corresponds to a precious metal load of 85 g/ft³ Pd.

### Example 3

Example 1 is repeated with the difference that the ceramic substrate is coated with a washcoat comprising palladium containing zeolites in an amount of 200 g/L (corresponds to 216 g/L incl. binder). This corresponds to a precious metal load of 170 g/ft³ Pd.

### Example 4

Example 2 is repeated with the difference that the zeolite is impregnated with 1.5 wt% palladium. This corresponds to a precious metal load of 42.5 g/ft³ Pd.

### Example 5

In a further step according to a common method, the catalyst obtained in accordance with example 4 is also coated over its entire length with a washcoat that contains platinum supported on aluminum oxide. The washcoat load of the second layer is 75 g/L, and the platinum load is 20 g/ft³.

### Example 6

The catalyst according to example 5 is combined with a second, coated, flow-through substrate to form an exhaust gas system. The second flow-through substrate is thereby exchanged with a zeolite of the chabazite structural type exchanged with 3 wt% copper (calculated as CuO). The washcoat load of the second flow-through substrate is 150 g/L.

## Claims

1. Catalyst comprising a carrier substrate of length L, palladium, and a zeolite, whose largest channels are formed by 12 tetrahedrally-coordinated atoms.

2. Catalyst according to claim 1, wherein the largest channels of the zeolite are formed by 12 tetrahedrally coordinated atoms and wherein the zeolite, in addition, comprises 8 rings.

3. Catalyst according to claim 1 or 2, **characterized in that** the zeolite belongs to the MOZ or ZSM-10 structural type.

4. Catalyst according to any one of claims 1 or 3, **characterized in that** the zeolite has a framework composition with an SAR of 2 to 100.

5. Catalyst according to any one of claims 1 to 4, **characterized in that** the palladium is present as palladium cation or wholly or partially as palladium metal and/or as palladium oxide in the zeolite structure and/or on the surface of the zeolite structure.

6. Catalyst according to any one of claims 1 to 5, **characterized in that** the palladium is present in quantities of 0.01 to 20 wt% in relation to the sum of the weights of zeolite and palladium and calculated as palladium metal.

7. Catalyst according to any one of claims 1 to 6, **characterized in that** the supporting body is a flow-through substrate or a wall-flow filter.

8. Catalyst according to any one of claims 1 to 7, **characterized in that** the zeolite and the palladium are present in the form of a coating on the carrier substrate.

9. Catalyst according to claim 8, **characterized in that** the carrier substrate carries a further catalytically-active coating.

10. Catalyst according to claim 9, **characterized in that** the further catalytically-active coating is an oxidation-catalytically-active coating.

11. Catalyst according to claim 10, **characterized in that** the oxidation-catalytically-active coating comprises platinum, palladium, or platinum and palladium on a carrier material.

12. Catalyst according to any one of claims 1 to 11, **characterized in that** a zeolite of the MOZ structural type plated with 0.5 to 4 wt% palladium extends directly on the carrier substrate over its entire length L, and upon this coating is a coating containing platinum or platinum and palladium in a mass ratio of 4:1 to 14:1 over the entire length L.

13. Exhaust gas system comprising
a) a catalyst comprising a carrier substrate of length L, palladium, and a zeolite, whose largest channels are formed by 12 tetrahedrally-coordinated atoms, and
b) an SCR catalyst.

14. Catalyst system according to claim 13, **characterized in that** the SCR catalyst is a zeolite which belongs to the framework type, BEA, AEI, AFX, CHA, KFI, ERI, LEV, MER, or DDR, and which is exchanged with cobalt, iron, copper, or mixtures of two or three of these metals.

15. Exhaust gas system according to claim 13 or 14, **characterized in that** an injection device for reducing agent is located between the catalyst comprising a carrier substrate of length L, palladium, and a zeolite whose largest channels are formed by 12 tetrahedrally-coordinated atoms, and the SCR catalyst.

16. Method for cleaning exhaust gases from motor vehicles that are operated with lean-burn engines, **characterized in that** the exhaust gas is channeled through an exhaust gas system according to any one of claims 13 to 15.
